# EUROPEAN PATENT APPLICATION

(11) **EP 4 538 528 A1**
(43) Date of publication of application: **16.04.2025**
(21) Application number: 23203224.3
(22) Date of filing: 12.10.2023
(51) Int. Cl.: F03D 13/10, F03D 13/20, F03D 80/80

(54) **WIND TURBINE TOWER PLATFORM PROVIDING MOUNTING FLEXIBILITY**

(71) Applicant: Siemens Gamesa Renewable Energy A/S, 7330 Brande (DK)
(72) Inventor: J H, Vishwanath, 577401 Karnataka (IN); Jeramiah A, Immanuel, 560043 Bangalore (IN); M, Anbalagan, 625534 Tamil nadu (IN); Sihag, Rajesh Kumar, 302017 Rajasthan (IN)
(74) Representative: SGRE-Association

(57) **Abstract**

It is described a wind turbine tower platform (1) to be installed within a wind turbine tower (36), comprising: a substantially plane floor (2) having an outer edge (3); plural adapter members (4, 4a,4b,4c,...) coupled to the floor (2) at different circumferential positions and protruding radially (6) outwards from the edge (3), an extension (Δr) of each radial protrusion being adjustable; the adapter members (4) having at radially outer portions respective tower connection members (8a,8b) for connecting the adapter members (4) to a tower wall (31) of the wind turbine tower (36).

## Description

### Field of invention

The present invention relates to a wind turbine tower platform to be installed within a wind turbine tower and also relates to a wind turbine tower. Further, the present invention relates to a method of manufacturing a wind turbine tower platform and further relates to a method of providing a wind turbine tower with a wind turbine tower platform.

### Art Background

Within a wind turbine tower, conventionally, plural platforms are installed at different heights. Usually, the diameter of the wind turbine tower decreases from the bottom to the top requiring to install different sized platforms at the different heights within the wind turbine tower. Conventionally, for each height, i.e., for each diameter of the tower wall, a particular platform has been constructed and designed and then installed at the particular height or diameter. Thereby, it is necessary to design, construct and install the different platforms in different sizes, involving a lot of constructional design efforts and involving also a lot of time and costs.

The document WO 2018/133964 A1 discloses a standardized platform arrangement of a wind turbine, the platform arrangement comprising a platform and a frame, wherein the platform is a standardized component while the frame is specifically adapted to the dimensions of the specific section of the tower. The frame comprises a first beam and a second beam arranged substantially perpendicular to each other wherein adaptation of the frame to the dimensions of the specific section of the tower is realized by varying the length of the beams of the frame.

As the diameter of the wind turbine tower varies along the longitudinal direction and also for different generations of the towers, always a new platform design must be created. Furthermore, tower ovality issues may occur.

Thus, there is a need for a wind turbine tower platform to be installed within a wind turbine tower and further there is a need for a wind turbine tower, for a method of manufacturing a wind turbine tower platform and there may be a need for a method of providing a wind turbine tower, wherein conventionally observed problems are at least mitigated, wherein in particular time efforts, constructional design efforts and/or costs may be reduced.

### Summary of the Invention

This need is met by the subject matter according to the independent claims. Advantageous embodiments of the present invention are described by the dependent claims.

According to an embodiment of the present invention it is provided a wind turbine tower platform to be installed within a wind turbine tower, comprising: a substantially plane floor having an outer edge; plural adapter members coupled to the floor at different circumferential positions and protruding radially outwards from the edge, an extension of each radial protrusion being adjustable; the adapter members having at radially outer portions respective tower connection members for connecting the adapter members (at outer ends) to a tower wall of the wind turbine tower.

The outer edge has preferably an annular shape.

The wind turbine tower platform may be installable at a particular height within the wind turbine tower. The wind turbine tower platform may for example be installable at a lower portion and/or middle portion and/or a top portion of the complete tower. The wind turbine tower platform may be provided to carry mechanical and/or electric and/or electronic equipment of the wind turbine, such as a generator, one or more converters, a transformer, portion of a power cable, a cooling system, compressors, light or a lighting system, pumps and so forth. The tower platform may comprise one or more openings via which for example a power cable may be led or guided from the bottom of the tower to substantially a top of the tower, where for example a generator is located in the completed wind turbine.

The tower platform may have for example a total diameter (including in particular the adapter members and an annular cover) of for example between 5 m and 10 m, for example. Other values are possible.

The plane floor may have a diameter smaller than the total diameter of the platform. The plane floor may be formed by one or more in particular metallic, substantially flat or plane plates which may be connected to each other. The outer edge may in particular be substantially circular or oval. The diameter of the annular edge may be smaller than the inner diameter of the tower section at which the tower platform is to be installed. Thus, there may be a distance or gap between the outer annular edge and an inner surface of the wind turbine tower at the vertical location where the tower platform is to be installed. This gap may then in particular be substantially closed by an annular gap cover which is described below in detail.

For the mechanical mounting of the floor (in particular also including one or more reinforcement beams or structures) to the tower wall, the adapter members are provided which, in the completely installed tower platform, reach from the floor (edge) to the inner surface of the tower wall at the vertical position where the tower platform is to be installed. In this sense, the adapter members provide a mounting bridge in order to mount the floor (potentially including other structural elements) at the inner surface of the tower wall, in particular across the entire circumference.

The adapter members may comprise one or more beams or bars which may be pivotable relative to each other. Thereby, the flexibility or adjustability of the extension of the adapter members regarding radial protrusion may be provided, i.e., protruding outwards from the outer edge of the floor.

The adapter members may in particular be coupled to the floor via or at respective reinforcement beams which will be explained below in more detail. Thus, the adapter members may either directly or indirectly be coupled to the floor.

The adapter members may be coupled across the entire circumference of the edge, for example having constant or equal circumferential offsets or positions or different circumferential offsets or positions. The different circumferential positions may refer to positions along the outer edge of the floor which may be defined by different azimuthal positions having substantially same radial position.

In the case where the plane floor is substantially a circular disk, i.e., the outer annular edge is substantially a circle.

How far the adapter members protrude radially outwards beyond the edge may be adjustable, in particular involving changing an inclusion angle between at least two arms or bars included in an adapter member as will be explained in more detail below.

According to an embodiment of the present invention, each or at least one adapter member comprises at least two arms or bars which are pivotable relative to each other in order to adjust the extension of the radial protrusion from the edge.

Thus, the adapter members are different from for example a telescopic arrangement comprising two bars which are slidable relative to each other in a parallel manner to provide adjustability of a total length.

Instead, at least two arms or bars included in each of the adapter members are swivelled or pivoted or rotated relative to each other, to provide adjustment of the amount or extension of radial protrusion. The at least two bars or arms included in at least one adapter member are also pivotably connected to each other, for example using a bolt and nut arrangement, wherein the two arms are pivotable relative to each other to include different inclusion angles, by swivelling or pivoting one or both around an axis provided by the bolt and nut arrangement. After having adjusted the desired or intended inclusion angle between the two bars, thereby providing the desired or intended radial protrusion from the floor, the bolt and nut may be tightened, in order to fix the respective inclusion angle between the two bars and thereby fix the intended radial protrusion from the outer edge of the floor.

The tower connection members may have different constructions according to different embodiments. The tower connection members may be provided at the most radially outer portion of the adapter members in order to reach the inside tower wall for connecting the adapter members and thus the floor to the inside tower wall.

Thereby, an advantageous platform design for varying shell diameters is provided. Also, slightly oval shaped tower sections may be supported, as the radial protrusion of each of the adapter members may be adjustable so as to allow mounting to a substantially circular shaped tower wall or an oval shaped tower wall section.

The extension of the radial protrusion of all the adapter members may substantially be equally set or may have different values, for example also for supporting installation at a slightly oval shaped tower wall section.

The number of adapter members may for example range between 10 and 40, in particular between 15 and 30, further in particular between 25 and 30. All of the plural adapter members may individually be adjusted regarding the extension of each radial protrusion.

Each adapter member may have at least one tower connection member, in particular two tower connection members or even more tower connection members. Thereby, a flexible wind turbine tower platform is provided which may be installable at differently sized tower sections or wind turbine towers.

According to an embodiment of the present invention, an extension of the radial protrusion is adjustable such that difference between a maximum and a minimum extent is between 500 mm and 1500 mm.

Thereby, it may be enabled to install/mount one and the same plane floor at different heights of a wind turbine tower having different diameters. For each height, the respective tower platform merely needs to be adapted in size, by adjusting the respective radial protrusions of the respective adapter members of this tower platform without adapting the floor (e.g. having constant size). Thus, the need for designing constructing and manufacturing for each tower section or for each size of the tower section, a particular entire tower platform may be avoided.

According to an embodiment of the present invention, the floor is configured partly as circular or oval disk and/or is formed by one or more plate members joint together.

Thereby, a conventional floor construction may be supported. The plate members may be joined together with nut and bolt arrangements or may be welded to each other.

According to an embodiment of the present invention, the wind turbine tower platform further comprises plural, in particular straight, reinforcement beams coupled below the floor, first beams being parallel to each other, second beams being parallel to each other and transverse, in particular orthogonal to the first beams.

The reinforcement beams may be bolted and/or welded to the floor. For example, there may be five to fifteen first beams and/or five to fifteen second beams, for rigidly and reliably enforcing the platform.

The first and second beams may have respective outer ends substantially being provided at or below the outer edge of the floor.

The adapter members may be coupled or connected to one or more of these outer ends of the enforcement beams. Thus, the adapter member may effectively carry the floor via the reinforcement beams or via carrying the reinforcement beams, for example. Additionally or alternatively, the adapter members may be directly connected or coupled to the floor or at least some of the adapter members may directly be coupled to the floor and other adapter members may directly be coupled or connected to the outer ends of the reinforcement beams or at least some of the reinforcement beams. Thereby, a reliable and strengthened construction and tower platform may be provided.

According to an embodiment of the present invention, at least one adapter member including a scissor joint, comprising two first arms and two second arms, wherein each first arm is pivotably connected to a second arm.

According to an embodiment, the scissor joint may at least comprise two first arms pivotably connected to each other, wherein by changing an inclusion angle between the two first arms, the extent of radial protrusion may be adjustable. According to another embodiment, the scissor joint further comprises the two second arms. The first arms and/or the second arms may be connected to each other. The first arms and/or the second arms may be constructed substantially from flat steel plates, such as substantially rectangular plates having a maximal extension in a longitudinal direction. By pivoting the two first arms and/or the two second arms relative to each other, the extension of radial protrusion from the floor may be adjustable. Thereby, a simple implementation of providing the adjustable radial protrusion may be provided.

According to an embodiment of the present invention, the two first arms are pivotably connected with each other, in particular using a bolt and a nut, at end portions; wherein the two second arms are pivotably connected at end portions with the first arms, in particular using two bolts and two nuts, and are pivotably connected with each other at middle portions, in particular using a bolt and a nut, wherein in particular one or two tower connection members are each pivotably connected at an end portion of the second arms, in particular using a bolt and a nut.

The two first arms may or may not have a same length as the two second arms. In particular, the two first arms may be shorter, for example between 90% and 50% of the length of the second arms. The first arms may be provided radially less outward, i.e., more inwards, than the second arms. At the second arms, and/or at ends of the second arms one or more tower connection members may be provided. Thereby, an advantageous implementation of the adapter members may be provided providing rigidity, and adjustability in an easy manner.

According to an embodiment of the present invention, the extension of the radial protrusion is adjustable by changing an angle between the first arms, thereby concurrently changing an angle between the second arms; and/or wherein for fixing the extension of the radial protrusion of the adapter members, the bolts and nuts are tightened.

The angle between the first arms may for example be adjustable in a range for example between 5° and 175°. The angle between the two second arms may alternatively or additionally be adjustable within a range between 5° and 175°. Thereby, the radial protrusion may be adjustable in a relatively large degree or amount, for example between 10 cm and 1.5 m or even 2 m.

According to an embodiment of the present invention, the wind turbine tower platform further comprises for at least one, in particular each, scissor joint a connection plate welded to the floor and/or to a reinforcement beam, the connection plate being, in particular pivotably, connected to the two first arms at the end portions, in particular using the bolt and the nut which are used for connecting the first arms with each other.

The connection plate may be a portion of the scissor joint or may be belonging or may be comprised within the floor and/or the reinforcement beams. The connection plate may or may not be pivotably connected to the two first arms. In a simple embodiment, the connection plate may only be connected in a fixed orientation to the first arms or a rotation axis about which the two first arms are pivotable. The connection plate may comprise a bushing in an extension plate protruding from the plane of the connection plate for allowing connection of the connection plate including the extension plate to the first arms or a rotation axis about which the two first arms are pivotable. Thereby, a simple and effective connection to the floor and/or the reinforcement beams may be provided.

According to an embodiment of the present invention, at least one tower connection member comprises an L-shaped member providing a first and a second substantially plane plate being orthogonal to each other and being joined at an edge; reinforcement arms connected to the first plate and the second plate, wherein in particular the first plate is pivotably connected with the end portion of a second arm.

The tower connection member may resemble a shape of a chair without legs. The first plate may be considered as a seating area, while the second plate may support a back of a person sitting on the first plate. The reinforcement arms may resemble armrests. Thereby, a rigid and stable construction may be provided for being capable of carrying a substantial weight.

According to an embodiment of the present invention at least one tower connection member comprises a stay member connected to the second plate and comprising a bolt for connecting to a tower wall, in particular to a bushing welded to the tower wall or to an internal thread provided at the tower wall.

The stay member may protrude substantially in the vertical direction above the L-shaped member when installed into the turbine tower. In other embodiments, the stay member may be dispensed with and for example the second plate may for example using bolt and/or nut be connected to the inside of a tower wall. However, the stay member may have a substantial extension of between 0.3 m and 1.5 m for advantageously connecting at a region above the floor to the inside of the tower wall.

According to an embodiment of the present invention, the tower platform further comprises an gap cover, for covering a, in particular circular, gap between the outer edge of the floor and the tower wall having radial extension between 500 mm and 1500 mm, an upper surface of the gap cover being in particular flush with an upper surface of the floor, the gap cover being arranged above the adapter members, the gap cover in particular being composed of plural sections.

Thereby, security issues may be met prohibiting that any personnel or installation crew may encounter when standing or working on the floor. Thus, the gap may be substantially closed by the gap cover such that there is substantially no uncovered region radially outwards from the outer edge of the floor unless such particular openings are intended by design or depending on the particular application.

According to an embodiment of the present invention it is provided a wind turbine tower, comprising a tower wall; a first wind turbine tower platform according to any one of the preceding claims having a first floor diameter and having a first connection diameter and being mounted at the tower wall at an inside at a first height using the tower connection members; in particular at least one second wind turbine tower platform according to any one of the preceding claims having the first floor diameter and having a second connection diameter different from the first connection diameter and being mounted at the tower wall at an inside at a second height using the tower connection members.

It is noted that the first as well as the second wind turbine tower platform utilize a same design or a same construction of the floor (potentially including one or more reinforcement beams and other equipment) while they may utilize differently adjusted adapter members. It is also noted that the first as well as the second tower platform may utilize a same construction of the adapter members, the adapter members are merely adjusted to provide different extension of radial protrusion. Thereby, design costs, manufacturing efforts and/or costs may be reduced.

It should be understood, that features, individually or in any combination, provided, described, explained or applied to a wind turbine tower platform may also be applicable to a method of manufacturing a wind turbine tower platform and/or to a method of providing a wind turbine tower and/or to a wind turbine tower, according to embodiments of the present invention and vice versa.

According to an embodiment of the present invention it is provided a method of manufacturing a wind turbine tower platform to be installed within a wind turbine tower, the method comprising: providing a substantially plane floor having an outer edge; coupling plural adapter members to the floor at different circumferential positions and protruding radially outwards from the edge; adjusting an extension of the radial protrusion of each adapter member in dependence of an tower installation diameter, wherein the adapter members having at radially outer portions respective tower connection members for connecting the adapter members to a tower wall of the wind turbine tower.

The method steps may be performed in any order. For example, the adjusting the extension of the radial protrusion of the adapter members may be performed before, during or after coupling the adapter members to the floor.

According to an embodiment of the present invention it is provided a method of providing a wind turbine tower with a wind turbine tower platform, the method comprising: performing a method of manufacturing a wind turbine tower platform according to the preceding claim; connecting the tower platform using the tower connection members to a tower wall of the wind turbine tower.

During or after connecting the tower platform using the tower connection members to the tower wall, the amount or extension of radial protrusion of the one or more adapter members may be readjusted. For example, nut and bolt arrangement may be loosened before connecting the tower platform using the tower connection members to the tower wall and may then (potentially after readjusting the radial protrusion) be tightened after the connection is finished.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates in a perspective view a wind turbine tower platform according to an embodiment of the present invention,
Fig. 2 schematically illustrates a detailed view of an adapter member mounted at a floor of a tower platform according to an embodiment of the present invention,
Fig. 3 illustrates in a partial transparent view a wind turbine tower platform according to an embodiment of the present invention,
Fig. 4 illustrates in a perspective view schematically an adapter member as used within a wind turbine tower platform according to an embodiment of the present invention, and
Fig. 5 schematically illustrates a portion of a wind turbine tower according to an embodiment of the present invention.

### Detailed Description

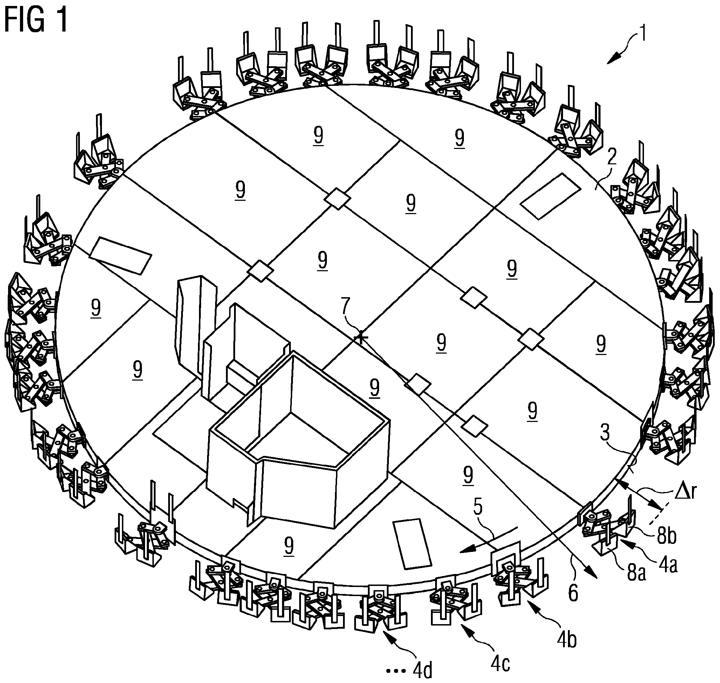

The wind turbine platform 1 illustrated in Fig. 1 in a perspective view according to an embodiment of the present invention comprises a substantially plane floor 2 having an outer annular edge 3. The tower platform 1 further comprises plural adapter members 4a, 4b, 4c (collected labelled with reference sign 4) which are coupled to the floor 2 at different circumferential positions (for example along a circumferential direction 5 following or corresponding for example to the direction along the outer annular edge 3). The adapter members 4 further protrude radially outwards, for example along a radial direction 6, defining an outward direction from a center point 7 (of the floor 2) to the annular edge 3. An extension in the radial direction denoted as Δr of the adapter members 4 is thereby adjustable.

Further, the adapter members 4 have at radially outer portions respective tower connection members 8a, 8b for connecting the adapter members 4 (for example at outer ends) to a tower wall of a wind turbine tower.

In the embodiment illustrated in Fig. 1, each of the adapter members 4 has two tower connection members 8a, 8b. In other embodiments, (any or at least) one adapter member may comprise for example only one tower connection member.

The extension Δr of the radial protrusion may be adjustable such that a difference between a maximum and a minimum extent is between 500 mm and 1500 mm, for example.

As can be appreciated from Fig. 1, the floor is configured as circular disk and is formed by one or more plate members 9 which are joint together, for example by nuts and/or bolts.

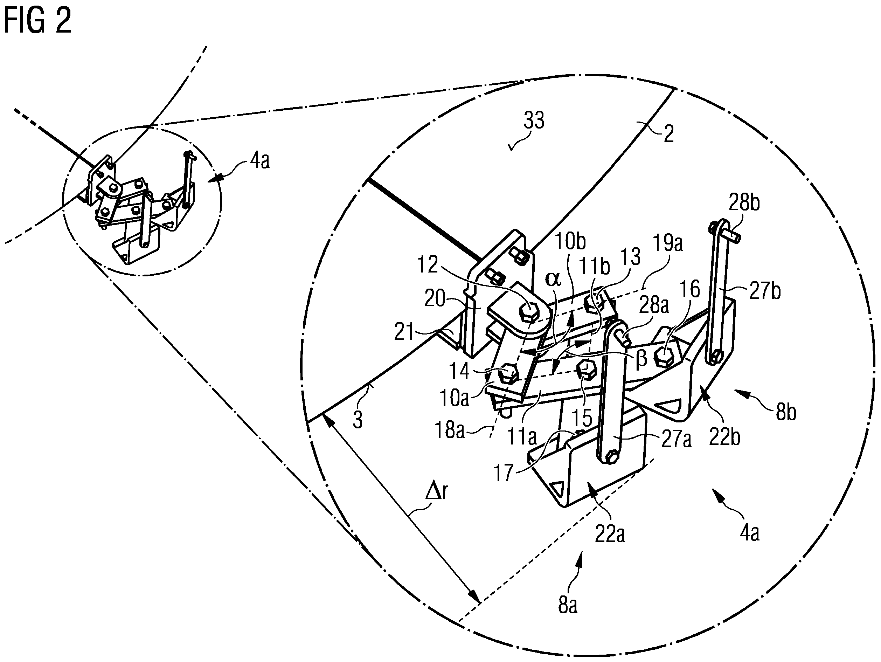

**Fig. 2** illustrates schematically one of the adapter members 4, i.e., 4a, in a more detailed and enlarged perspective view. The adapter member 4a is configured or includes a scissor joint, comprising two first arms 10a, 10b and two second arms 11a, 11b which are pivotably connected to each other. As can be seen in Fig. 2, the first arms 10a, 10b are pivotably connected with each other using bolt 12 and a nut (not visible in Fig. 2) at end portions thereof.

Furthermore, as can be seen in Fig. 2, the two second arms 11a, 11b are also pivotably connected at end portions with the first arms 10a, 10b in particular using two bolts 13, 14 and not visible nuts. The two second arms 11a, 11b are further pivotably connected with each other at middle portions using a bolt 15 and a not visible nut.

The scissor joint or the entire platform further comprises a tower connection member, in particular two tower connection members 8a, 8b, which are each pivotably connected at an end portion of the second arms 11a, 11b, in particular each by a bolt 16, 17 and a not illustrated nut.

As can be appreciated from Fig. 2, the first arms 10a, 10b have respective longitudinal directions 18a, 19a including an angle α. The extension of radial protrusion Δr can be adjusted by changing the angle α between the first arms 10a, 10b. Thereby, also concurrently an angle β between longitudinal axes of the second arms 11a, 11b is changed. For fixing the extension of the radial protrusion Δr of the adapter members, the respective bolts 13, 14, 15, 16, 17 may be tightened.

As can further be taken from Fig. 2, for each scissor joint 4a, a connection plate 20 is provided which is welded to a reinforcement beam or platform beam 21 which is provided below the floor 2. The connection plate 20 is pivotably connected to the two first arms 10a, 10b (using the bolt nut 12) at end portions in particular using the bolt and the nut 12 which are used for connecting the first arms 10a, 10b with each other.

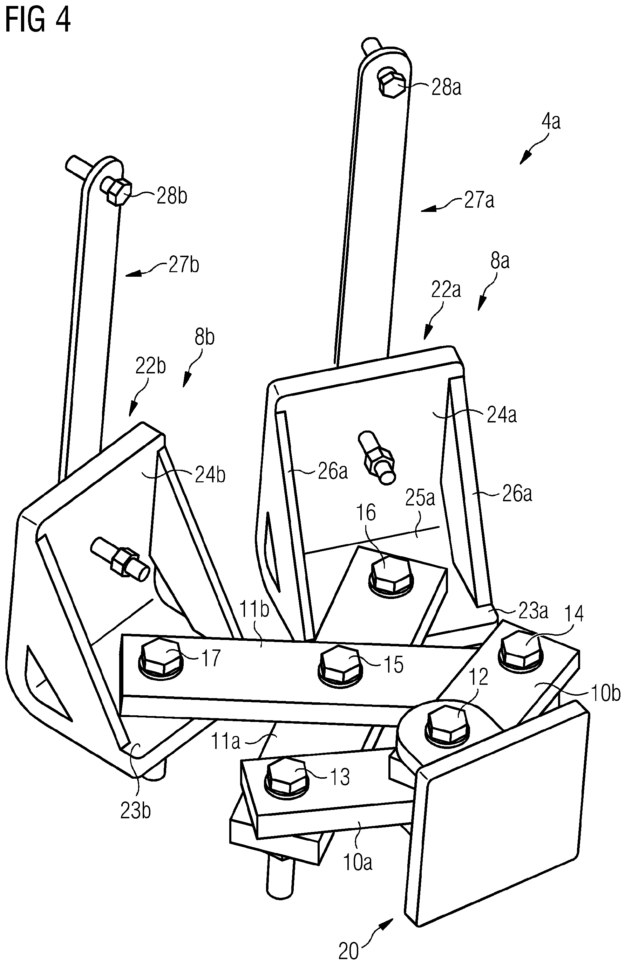

As can be seen in **Fig. 4** illustrating the scissor joint 4a in another perspective view in a schematic manner, the connection members 8a, 8b each comprise an L-shaped member 22a, 22b, providing a first plane plate 23a and a second plane plate 24a being orthogonal to each other and being joined at an edge 25a. Further, the connection member 8a comprises reinforcement arms 26a, 26a' connected to the first plate 23a and the second plate 24a. In the illustrated embodiment, the first plate 23a is pivotably connected with the end portion of the second arm 11b.

As can further be taken from Fig. 4, at least one tower connection member 8a comprises a stay member 27a which is connected to the second plate 24a and comprising a bolt 28a for connecting it to a tower wall.

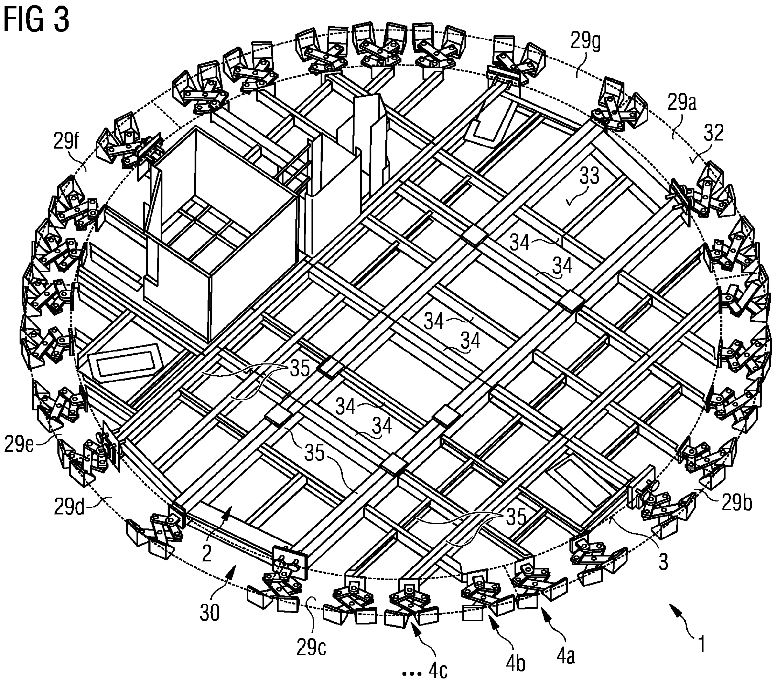

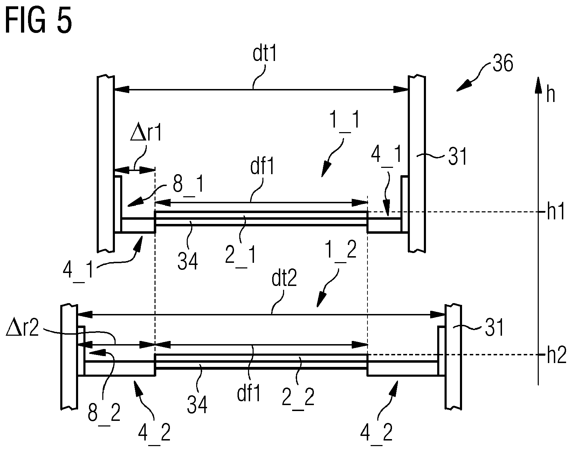

**Fig. 3** illustrates in a schematic perspective view a tower platform 1 in a partial transparent view, wherein the floor and an annular gap cover 29, for example comprised of annular gap cover sections 29a, 29b, 29c, 29e, 29f being partially transparently illustrated. The annular gap cover 29 is for covering an annular gap 30 between the outer annular edge 3 of the floor 2 and the tower wall 31 (for example illustrated in Fig. 5) having a radial extension between 500 mm and 1500 mm. An upper surface 32 of the gap cover being in particular flush with an upper surface 33 of the floor 2, the gap cover 29 being arranged above the adapter members 4.

In the illustrated embodiment, the annular gap cover 29 it is composed of plural annular sections 29a, ..., 29f. Due to the partially transparent view of Fig. 3, also reinforcement beams 34 and 35 are visible which are coupled below the floor 2. Thereby, the first reinforcement beams 34 are parallel to each other and second beams 35 are also parallel to each other and transverse, in particular orthogonal, to the first beams 34.

**Fig. 5** schematically illustrates a portion of a wind turbine tower 36 in a side sectional view in which tower platforms 1_1 and 1_2 are installed according to an embodiment of the present invention. The wind turbine tower 36 comprises a tower wall 31 and further a first wind turbine tower platform 1_1 (for example as illustrated in Figs. 1, 2, 3, respectively) which has a first connection diameter dt1 (corresponding to the diameter of the tower at this vertical height h1). Using the tower connection member 8a, the first wind turbine tower platform 1_1 is mounted at the tower wall 31.

The tower 36 further has a second wind turbine tower platform 1_2 installed having a second connection diameter dt2 (corresponding to the diameter of the tower at this other height h2). As can be seen, the second connection diameter dt2 is different, in particular larger than the first connection diameter dt1.

Furthermore, the first tower platform 1_1 has the same floor diameter df1 as the second tower platform 1_2. However, the adapter members 4_1 of the first tower platform 1_1 have a radial extension Δr1, while the adapter members 4_2 of the second tower platform 1_2 have a radial extension Δr2 which is larger than the first radial extension Δr1.

The platforms and the tower illustrated in the figures above may be manufactured according to a method of manufacturing a wind turbine tower platform according to an embodiment of the present invention. Thereby first, a plane floor 2 may be provided having an outer annular edge 3. Then, plural adapter members 4 may be coupled to the floor 2 at different circumferential positions and protruding radially outwards from the annular edge 3. Further, the method may comprise to adjust an extension of the radial protrusion Δr of each adapter member 4 in dependence of a tower insulation diameter (for example dt1, dt2 illustrated in Fig. 5). Thereafter, the respective tower platform may be connected using the tower connection members 8a, 8b to the wind turbine tower wall.

Embodiments provide a designing of one standard platform with flexible arrangements (for example adapter members) in a given range of diameters. The flexible arrangement or adapter members may be configured as scissor joints. Embodiments may provide for optimized primary structure design wind turbines having varying diameter and tower size or shape. As the diameter at the top section of a complete tower will be minimum, the scissors' arrangements may be set at this minimum position. At the middle section, the tower diameter will be maximum the scissors' arrangement will be at maximum radial protrusion.

Embodiments of the present invention provide a platform arrangement with a standardized platform (floor portion) and flexible scissor joints are provided which can be adjusted based on the varying tower diameter. A scissor joint may be welded to the platform beam which may be below the floor plate with the help of a weld plate. A first arm is connected to the weld plate using bolt and nut assembly. To get the extended length first arm is now connected to a second arm using fastener (bolt and nut assembly).

The L-plate is used at the end of the scissor joint and is connected using fasteners. This L-plate can be rotated along the bolt axis to meet the curvature of the tower wall. By using the stay arrangement, the entire platform along with the scissor joints is connected to the tower wall weld bushings. The floor or platform floor may continue to have all the other elements such as machine, shoes and so forth to meet the design criteria of the particular application.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Wind turbine tower platform (1) to be installed within a wind turbine tower (36), comprising:
a substantially plane floor (2) having an outer edge (3) ;
plural adapter members (4, 4a,4b,4c,...) coupled to the floor (2) at different circumferential positions and protruding radially (6) outwards from the edge (3), an extension (Δr) of each radial protrusion being adjustable;
the adapter members (4) having at radially outer portions respective tower connection members (8a,8b) for connecting the adapter members (4) to a tower wall (31) of the wind turbine tower (36),
the adapter members (4) in particular each comprising two first arms (10a,b) and two second arms (11a,b), wherein each first arm (10a,b) is pivotably connected to a second arm (11a,b).

2. Wind turbine tower platform according to the preceding claim, wherein an extension (Δr) of the radial protrusion is adjustable such that difference between a maximum and a minimum extent is between 500 mm and 1500 mm.

3. Wind turbine tower platform according to any one of the preceding claims, wherein the floor (2) is configured partly as circular or oval disk and/or is formed by one or more plate members (9) joined together.

4. Wind turbine tower platform according to any one of the preceding claims, further comprising:
plural, in particular straight, reinforcement beams (34,35) coupled below the floor (2), first reinforcement beams (34) being parallel to each other, second reinforcement beams (35) being parallel to each other and transverse, in particular orthogonal to the first reinforcement beams (34).

5. Wind turbine tower platform according to any one of the preceding claims, wherein at least one adapter member (4) includes a scissor joint comprising the two first arms (10a,b) and the two second arms (11a,b), wherein each first arm (10a,b) is pivotably connected to a second arm (11a,b).

6. Wind turbine tower platform according to claim 5,
wherein the two first arms (10a,b) are pivotably connected with each other, in particular using a bolt (12) and a nut, at end portions;
wherein the two second arms (11a,b) are pivotably connected at end portions with the first arms (10a,b), in particular using two bolts (13, 14) and two nuts, and are pivotably connected with each other at middle portions, in particular using a bolt (15) and a nut,
wherein in particular one or two tower connection members (8a,b) are each pivotably connected at an end portion of the second arms, in particular using a bolt (16, 17) and a nut.

7. Wind turbine tower platform according to any one of claims 5 and 6,
wherein the extension (Δr) of the radial protrusion is adjustable by changing an angle (α) between the first arms (10a,b), thereby concurrently changing an angle (β) between the second arms (11a,b); and/or
wherein for fixing the extension of the radial protrusion of the adapter members, the bolts (12, 13, 14, 15, 16, 17) and nuts are tightened.

8. Wind turbine tower platform according to any one of claims 5 to 7, further comprising for at least one, in particular each, scissor joint:
a connection plate (20) welded to the floor (2) and/or to a reinforcement beam (21, 34, 35), the connection plate being, in particular pivotably, connected to the two first arms (10a,b) at the end portions, in particular using the bolt and the nut which are used for connecting the first arms with each other.

9. Wind turbine tower platform according to any one of the preceding claims, at least one tower connection member comprising:
an L-shaped member (22a,22b) providing a first (23a) and a second substantially plane plate (24a) being orthogonal to each other and being joined at an edge;
reinforcement arms (26a, 26a') connected to the first plate and the second plate,
wherein in particular the first plate is pivotably connected with the end portion of a second arm.

10. Wind turbine tower platform according to any one of the preceding claims, at least one tower connection member comprising:
a stay member (27a, 27b) connected to the second plate (24a) and comprising a bolt (28a) for connecting to a tower wall, in particular to a bushing welded to the tower wall or to an internal thread provided at the tower wall.

11. Wind turbine tower platform according to any one of the preceding claims, further comprising:
a gap cover (29), for covering a, in particular circular, gap (30) between the outer edge (3) of the floor (2) and the tower wall (31) having radial extension between 500 mm and 1500 mm,
an upper surface (32) of the gap cover (29) being in particular flush with an upper surface (33) of the floor (2), the gap cover being arranged above the adapter members (4),
the gap cover in particular being composed of plural sections (29a, ..., 29f).

12. Wind turbine tower (36), comprising:
a tower wall (31);
a first wind turbine tower platform (1_1) according to any one of the preceding claims having a first floor diameter (df1) and having a first connection diameter (dt1) and being mounted at the tower wall at an inside at a first height using the tower connection members (8a,8b);
in particular at least one second wind turbine tower platform (1_1) according to any one of the preceding claims having the first floor diameter (df1) and having a second connection diameter (dt2) different from the first connection diameter (dt1) and being mounted at the tower wall at an inside at a second height using the tower connection members (8a, 8b) .

13. Method of manufacturing a wind turbine tower platform (1) to be installed within a wind turbine tower (36), the method comprising:
providing a substantially plane floor (2) having an outer edge (3);
coupling plural adapter members (4) to the floor at different circumferential positions and protruding radially outwards from the edge;
adjusting an extension (Δr) of the radial protrusion of each adapter member (4) in dependence of an tower installation diameter (dt1, dt2),
wherein the adapter members having at radially outer portions respective tower connection members for connecting the adapter members to a tower wall of the wind turbine tower.

14. Method of providing a wind turbine tower with a wind turbine tower platform, the method comprising:
performing a method of manufacturing a wind turbine tower platform (1, 1_1, 1_2) according to the preceding claim;
connecting the tower platform (1, 1_1, 1_2) using the tower connection members to a tower wall (31) of the wind turbine tower (36).
